# EUROPÄISCHE PATENTSCHRIFT

(11) **EP 0 820 934 B1**
(45) Veröffentlichungstag und Bekanntmachung des Hinweises auf die Patenterteilung: **27.03.2002**
(21) Anmeldenummer: 96120438.5
(22) Anmeldetag: 18.12.1996
(51) Int. Cl.: B65D 1/20, B65D 1/18, B65D 25/42, B29C 49/20

(54) **Behälter für den Transport von Flüssigkeiten**
Container for transporting liquids
Récipient pour le transport de liquides

(30) Priorität: 21.07.1996 DE 29612541 U
(43) Veröffentlichungstag der Anmeldung: 28.01.1998
(73) Patentinhaber: Frohn, Walter, Dr.-Ing., 81545 München (DE)
(72) Erfinder: Frohn, Walter, Dr.-Ing., 81545 München (DE)
(74) Vertreter: Albrecht, Thomas, Dr.

(56) Entgegenhaltungen:
- EP-A- 0 677 445
- DE-U- 9 406 266
- GB-A- 144 471
- US-A- 3 901 417
- US-A- 5 234 130

## Beschreibung

Die Erfindung betrifft einen im Blasverfahren hergestellten Behälter für den Transport von Flüssigkeiten mit waagerechtem Oberboden und einem einer Seitenwand zugeordneten Ausgießstutzen sowie einem über dem Oberboden verlaufenden, im Blasverfahren angeformten Belüftungskanal, der den Ausgießstutzen mit dem von der Inhaltsflüssigkeit bei deren Entleeren abgeschlossenen Innenraum des Behälters verbindet, und eine Vorrichtung zu seiner Herstellung, die einen Blas- und Kalibrierdorn sowie einen Nebendorn des Blas- und Kalibrierdorns aufweist, sowie ein Verfahren zum Herstellen dieses Behälters.

Belüftungskanäle der vorgenannten Art haben den Zweck, die Bildung von Unterdruck in dem abgeschlossenen Raum und dadurch verursachtes Gluckern und Verspritzen der Inhaltsflüssigkeit beim Ausgießen zu verhindern, was bei gefährlichen Flüssigkeiten unter allen Umständen zu vermeidende Folgen haben kann.

In dem Gebrauchsmuster DE 94 06 266 U ist ein Behälter mit einem solchen Belüftungskanal beschrieben, der beim Schließen einer zweiteiligen Blasform mit zusätzlichen Quetsch- und.Schneidkanten aus dem schlauchförmigen Kunststoffvorformling gebildet wird. Der oberhalb des Oberbodens des Behälters in dessen rückwärtige Schulter verlaufende Belüftungskanal mündet mit einem senkrechten kurzen Kanalstück im Ausgießstutzen an dessen der Ausgießseite gegenüber liegenden Wand, wo er an seinem Ende durch einen zusätzlichen vertikal bewegten Kalibrierdorn geöffnet wird.

Der sich dabei ergebende Nachteil ist, daß die Einlaßöffnung des Belüftungskanales sehr tief in der Ausgußtülle liegt, damit am Ausgießstutzen eine ausreichende Gewindehöhe zum Verschließen des Behälters verbleibt. Das birgt die Gefahr, daß die Inhaltsflüssigkeit bei ihrem Ausgießen, insbesondere infolge des Sogs des Unterdruckraumes, in den Belüftungskanal gelangt und ihn gerade zu Beginn des Ausgießens blockiert und dadurch einen Gluckerstoß verursacht. Außerdem kann durch das Abquetschen des Belüftungskanales innerhalb des Ausgießstutzens dessen Wand geschwächt werden, die dann den mechanischen Belastungen eines Gefahrengutbehälters nicht standhält.

Nach der EP 0 677 445 A ist dieser im Blasverfahren angeformte Belüftungskanal bis zum obersten Gewindegang des Ausgießstutzens heraufgeführt, so daß die unteren Gewindegänge unterbrochen sind. Das hat zwar den Vorteil, daß beim Ausgießen keine Flüssigkeit in den Belüftungskanal gelangen kann, aber den Nachteil, daß die Verschlußsicherheit vermindert wird.

Aufgabe der Erfindung ist es, die volle Funktion des Belüftungskanales ohne Abquetschen der Gewindegänge des Ausgießstutzens zu erhalten und das Einsaugen von Inhaltsflüssigkeit beim Ausgießen vollständig auszuschließen.

Diese Aufgabe wird bei dem Behälter, sowie der Vorrichtung und dem Verfahren zu dessen Herstellung, wie sie eingangs angegeben sind, durch die in den Patentansprüchen beschriebenen Ausbildungen und Maßnahmen gelöst.

Der von der Behälterschulter abgequetschte waagerechte Belüftungskanal tritt unterhalb des Ansatzes des Ausgießstutzens, vor allem unterhalb seines Gewindes und seines Rasterrings, in den Ausgießstutzen in gerader Fortsetzung ein und wird dort durch Abquetschen geschlossen. Während des Kalibrierens des Innendurchmessers der Mündung des Ausgießstutzens wird die plane obere Oberfläche des Belüftungskanales innerhalb der Mündung des Ausgießstutzens von einem zweiten Blasdorn geöffnet und kalibriert. In dieser kalibrierten Öffnung wird eine Verlängerungstülle form- und kraftschlüssig eingesetzt, deren Länge bis zur Oberkante des Entleerungsstutzens reichen kann.

Durch diese erfindungsgemäßen Ausgestaltungen und Maßnahmen wird nicht nur ein sicheres und gluckerfreies Ausgießen ermöglicht, sondern es werden auch alle Gewindegänge des Ausgießstutzens und damit die Sicherheit des Verschlusses voll erhalten.

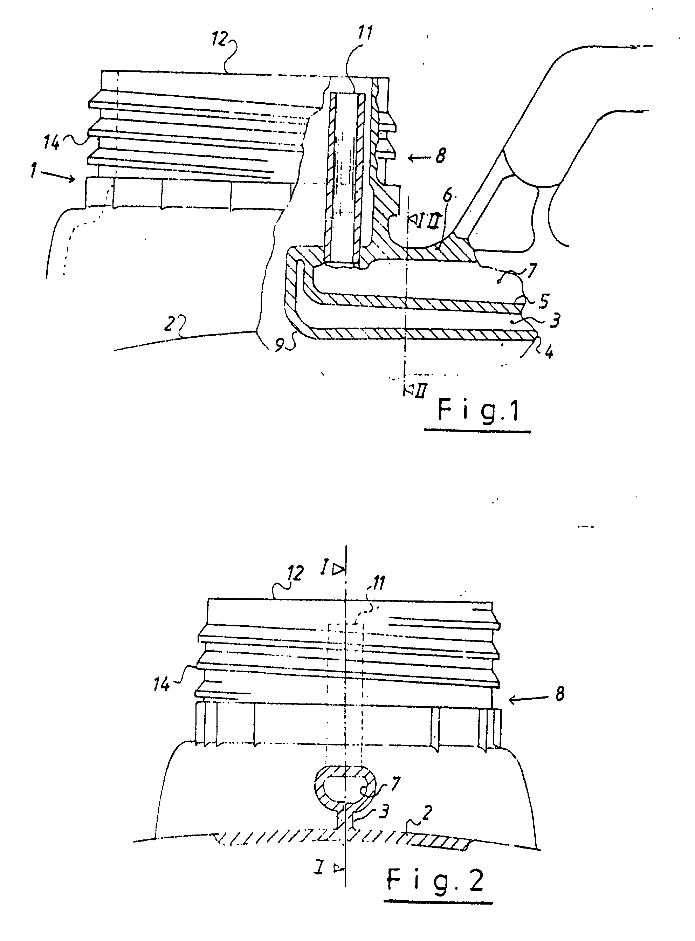

Ein Ausführungsbeispiel der Erfindung wird im folgenden anhand der Zeichnungen näher beschrieben. Diese zeigen in
- Fig.1: eine Teilseitenansicht eines erfindungsgemäßen Behälters mit einem Ausbruch mit Draufsicht auf einen Schnitt in Ebene I-I in Fig.2 und 3;
- Fig.2: eine teilweise Seitenansicht auf die Rückseite des Ausgießstutzens des Behälters zu Fig.1 mit einem Schnitt durch den Belüftungskanal in Ebene II-II in Fig. 1;
- Fig.3: eine Draufsicht auf den Ausgießstutzen des Behälters zu Fig.1 von oben mit anschließendem Belüftungskanal;
- Fig.4: eine schematische Darstellung der Vorrichtung zum Einsetzen der Verlängerungstülle in Seitenansicht;
- Fig.5: eine schematische Darstellung der Vorrichtung zu Fig.4 in Draufsicht von oben.

Der Behälter weist einen nach seiner Ausgießseite 1 abfallenden, im übrigen waagerechten Oberboden 2 auf, an dem ein Steg 3 in einer Abquetschung 4 durch beiderseitige Quetschleisten der Blasform angeformt ist. Der Steg 3 trägt den durch weitere Abquetschungen 5 und 6 gebildeten Belüftungskanal 7. Der Belüftungskanal 7 ragt waagerecht und gerade in den Ausgießstutzen 8 und ist durch die Abquetschungen der Stege 5 und 6 mit einer nach oben führenden Biegung 9 zunächst geschlossen.

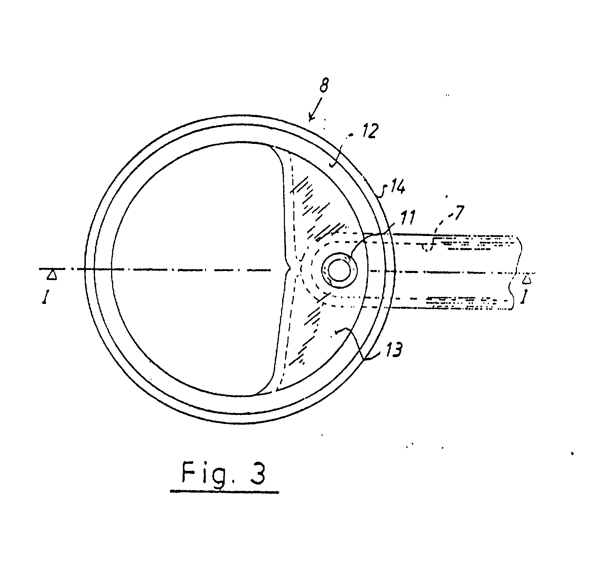

Beim Aufblasen des Behälters wird mit einem Zweitdorn des in die Mündung des Ausgießstutzens 8 eingefahrenen Blas- und Kalibrierdorns das verschlossene Ende des Belüftungskanales 7 an seiner Oberseite flachgedrückt und dann geöffnet und zu einer runden Einsatzöffnung 10 kalibriert. In diese Einsatzöffnung 10 ist eine Verlängerungstülle 11 flüssigkeitsdicht und form- und kraftschlüssig eingesetzt, die bis an die Oberkante 12 des Ausgießstutzens 8 reichen kann. Sie wird in ihrer Höhe nur von der Form der Innenseite der Verschlußkappe des Ausgießstutzens 8 begrenzt. Durch die Abquetschungen des Steges 3 ergeben sich Einkerbungen in den Hals des Ausgießstutzens 8, die in dessen Inneren eine waagerechte Stufe 13 bilden, in der die Einsatzöffnung 10 liegt (Fig.3). Die Schraubengänge des Außengewindes 14 des Ausgießstutzens 8 bleiben, da sie oberhalb der Stufe 13 liegen, voll erhalten, so daß eine vollständige Sicherheit des Verschlusses des Ausgießstutzens 8 gegeben ist. Da die Schulterpartie des geblasenen Behälters wegen der besonders großen Materialanhäufung sehr heiß ist und erst nach längerer Zeit abkühlt, ist kein großer Einpreßdruck für das Einsetzen der Verlängerungstülle 11 notwendig. Nach der Abkühlung der Schulterpartie des Behälters ist der Festsitz der Verlängerungstülle 11 infolge der Schrumpfspannung gesichert.

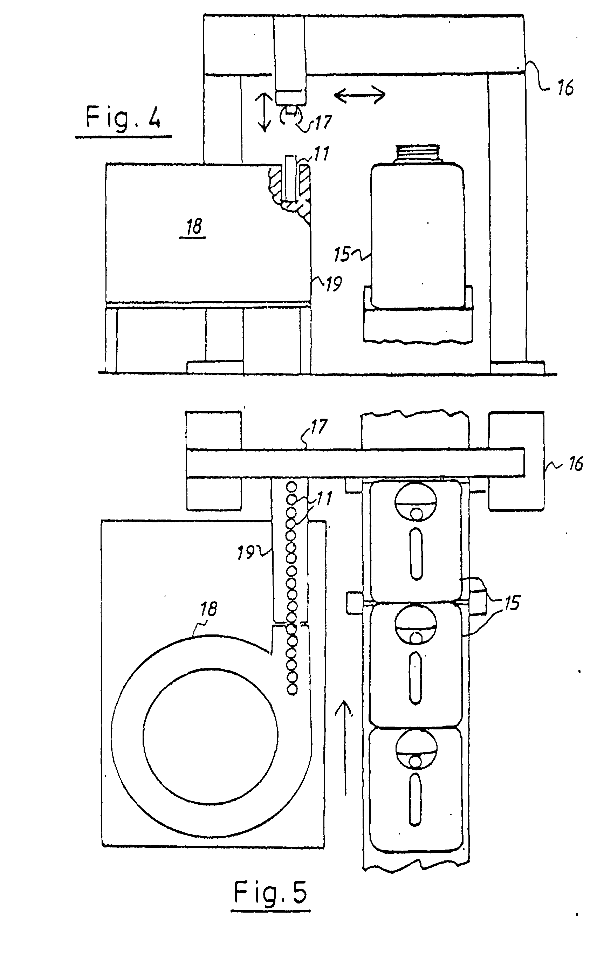

Das Einsetzen der Verlängerungstülle 11 erfolgt im Zyklus der Blasmaschine und des Austoßens an Behältern 15 (Fig.4 und 5), und zwar entweder in der zweiten Stufe für die Nachkühlung, indem der auf die Mündung des Behälters aufgesetzte Luftspüldorn mit einem 3-Finger-Greifer ausgerüstet ist, der die Verlängerungstülle 11 aufnimmt und einpresst, oder außerhalb der Blasmaschine, zum Beispiel vor der Dichtheitsprüfung des Behälters 15.

Ein Roboter 16 kann mit einem Greifer 17 je eine Verlängerungstülle 11 im Produktionstakt der Blasmaschine aus dem Magazin 18 des Linearförderers 19 entnehmen und diese in die kalibrierte Einsatzöffnung 10 des Belüftungskanales 7 des Behälters 15 einführen. Dieser gesamte Bewegungsablauf kann elektronisch gesteuert und durch Sensoren überwacht werden.

## Patentansprüche

1. Im Blasverfahren hergestellter Behälter für den Transport von Flüssigkeiten mit waagerechtem Oberboden und einem einer Seitenwand zugeordneten Ausgießstutzen sowie einem über dem Oberboden verlaufenden, im Blasverfahren angeformten Belüftungskanal, der den Ausgießstutzen mit dem von der Inhaltsflüssigkeit bei deren Entleeren abgeschlossenen Innenraum des Behälters verbindet, **dadurch gekennzeichnet, daß** der Belüftungskanal (7) waagerecht und gerade in den Ausgießstutzen (8) unterhalb von dessen Außengewinde (14) hineinragt und im Ausgießstutzen (8) an seiner Oberseite eine Einsatzöffnung (10) aufweist, in der eine senkrechte Verlängerungstülle (11) angeordnet ist, die bis zur Unterseite der Verschlußkappe des Ausgießstutzens (8) reicht.

2. Behälter nach Anspruch 1, **dadurch gekennzeichnet, daß** die Verlängerungstülle (11) nach dem Aufblasen des Behälters und in den noch heißen Belüftungskanal (7) eingesetzt und beim Abkühlen eingeschrumpft ist.

3. Vorrichtung zur Herstellung eines Behälters nach Anspruch 1 oder 2, die einen Blas- und Kalibrierdorn sowie einen Nebendorn des Blas- und Kalibrierdorns aufweist, **dadurch gekennzeichnet, daß** das in den Ausgießstutzen (8) ragende Ende des Belüftungskanals (7) von dem Blasdorn oder dem Nebendorn des Blasdorns plangedrückt, vom Nebendorn des Blas- und Kalibrierdorns geöffnet und die entstehenden Einsatzöffnung (10) für den Einsatz der Verlängerungstülle (11) kalibriert wird, und daß
(a) ein mit dem Spüldorn der Blasmaschine verbundener Greifer (17) vorgesehen ist, der die Verlängerungstüllen (11) aus einem Magazin (18) entnimmt und in die Einsatzöffnung (10) des Belüftungskanales (7) einsetzt;
oder
(b) ein Roboter (16) vorgesehen ist, der an der Blasmaschine oder nach Ablauf der Fertigung der Behälter (15) die aus einem Magazin (18) übernommenen Verlängerungstüllen (11) in die Einsatzöffnung (10) des Belüftungskanales (7) einsetzt.

4. Verfahren zur Herstellung eines Behälters nach Anspruch 1 oder 2, **dadurch gekennzeichnet, daß** die beim Kalibrieren des Ausgießstutzens (8) durch Plandrücken des in den Ausgießstutzen (8) ragenden Endes des Belüftungskanals (7) sowie durch Öffnen desselben und Kalibrieren mit einem Nebendorn gebildete Einsatzöffnung (10) bei noch vom Blasvorgang warmem Behälter in einem maschinellen elektronisch kontrollierbaren Verfahren eingesetzt und eingeschrumpft wird.

5. Verfahren nach Anspruch 4, **dadurch gekennzeichnet, daß** an dem Luftspüldorn zur Kühlung des fertig geblasenen Behälters (15) oder an einem an der Blasmaschine vorgesehenen Roboter (16) ein Greifer (17) vorgesehen ist, mit dem eine aus einem Magazin zugeführte Verlängerungstülle (11) in die Einsatzöffnung (10) eingepreßt wird.

## Claims

1. A blow-moulded container for transporting liquids, having a horizontal ceiling and a pouring neck associated with a side wall together with a vent extending above the ceiling and moulded in the blow moulding process, which vent connects the pouring neck with the inside of the container, which is sealed off by the liquid contents during emptying thereof, **characterised in that** the vent (7) projects horizontally and straight into the pouring neck (8) beneath the external thread (14) thereof and comprises an insert opening (10) in the pouring neck (8) at the top thereof, in which insert opening (10) there is arranged a perpendicular extension spout (11), which extends as far as the bottom of the closing cap of the pouring neck (8).

2. A container according to claim 1, **characterised in that** the extension spout (11) is inserted into the still hot vent (7) after inflation of the container and shrunk in on cooling.

3. A device for producing a container according to claim 1 or claim 2, which comprises a blowing and calibrating mandrel together with an ancillary mandrel of the blowing and calibrating mandrel, **characterised in that** the end of the vent (7) projecting into the pouring neck (8) is pressed flat by the blowing mandrel or the ancillary mandrel of the blowing mandrel and opened by the ancillary mandrel of the blowing and calibrating mandrel, and the insert opening (10) produced is calibrated for insertion of the extension spout (11) and **in that**
(a) a gripper (17) connected with the flushing mandrel of the blow moulding machine is provided, which removes the extension spouts (11) from a magazine (18) and inserts them into the insert opening (10) of the vent (7) ;
or
(b) a robot (16) is provided which, on the blow moulding machine or after manufacture of the containers (15), inserts the extension spouts (11) taken from a magazine (18) into the insert opening (10) of the vent (7).

4. A method of producing a container according to claim 1 or claim 2, **characterised in that** the insert opening (10) formed during calibration of the pouring neck (8) by pressing flat the end of the vent (7) projecting into the pouring neck (8) and opening thereof and calibration with an ancillary mandrel is inserted and shrunk in in a mechanical, electronically controllable procedure while the container is still hot from the blow moulding process.

5. A method according to claim 4, **characterised in that** a gripper (17) is provided on the air flushing mandrel for cooling the finished blow-moulded container (15) or on a robot (16) provided on the blow moulding machine, with which gripper (17) an extension spout (11) fed from a magazine is forced into the insert opening (10).

## Revendications

1. Récipient produit par un procédé de soufflage, pour le transport de liquides, comprenant un fond horizontal et un manchon de déversement associé à une paroi latérale, ainsi qu'un canal d'aération formé lors du procédé de soufflage et s'étendant au-dessus du fond, qui relie le manchon de déversement à la cavité intérieure du récipient, isolé vis-à-vis du liquide contenu lors de sa vidange, **caractérisé en ce que** le canal d'aération (7) pénètre horizontalement et exactement dans le manchon de déversement (8) au-dessous de son pas de vis extérieur (14), et présente dans le manchon de déversement (8) à sa face supérieure une ouverture d'introduction (10), laquelle est agencée dans une douille de prolongation verticale (11) qui s'étend jusqu'à la face inférieure du capuchon d'obturation du manchon de déversement (8).

2. Récipient selon la revendication 1, **caractérisé en ce que** la douille de prolongation (11) est mise en place après le soufflage du récipient et dans le canal d'aération (7) encore chaud, et rétractée lors du refroidissement.

3. Appareil pour la fabrication d'un récipient selon l'une ou l'autre des revendications 1 et 2, qui comprend un mandrin de soufflage et de calibrage, ainsi qu'un mandrin annexe du mandrin de soufflage et de calibrage, **caractérisé en ce que** l'extrémité du canal d'aération (7) qui pénètre dans le manchon de déversement (8) est écrasée à plat par le mandrin de soufflage ou par le mandrin annexe du mandrin de soufflage, ouverte par le mandrin annexe du mandrin de soufflage et de calibrage, et **en ce que** l'ouverture d'introduction (10) ainsi réalisée est calibrée pour la mise en place de la douille de prolongation (11), et **en ce que** :
(a) il est prévu un organe de saisie (17), relié au mandrin de soufflage de la machine de soufflage, qui prélève les douilles de prolongation (11) depuis un magasin et les met en place dans l'ouverture d'introduction (10) du canal d'aération (7) ;
ou
(b) il est prévu un automate (16) qui, dans la machine de soufflage ou après déroulement de la fabrication du récipient (15), met en place les douilles de prolongation (11), prélevées depuis un magasin à magasin (18), dans l'ouverture de mise en place (10) du canal d'aération (7).

4. Procédé pour la fabrication d'un récipient selon l'une ou l'autre des revendications 1 et 2, **caractérisé en ce que** l'ouverture de mise en place (10) formée lors du calibrage du manchon de déversement (8) par écrasement à plat de l'extrémité du canal d'aération (7) qui pénètre dans le manchon de déversement (8) et par ouverture de celle-ci et calibrage avec un mandrin annexe tandis que le récipient est encore chaud de l'opération de soufflage, est mise en place suivant un procédé en machine susceptible d'être commandé par voie électronique et rétractée.

5. Procédé selon la revendication 4, **caractérisé en ce qu'**il est prévu, sur le mandrin de soufflage d'air destiné au refroidissement du récipient soufflé terminé (15) ou sur un automate (16) prévu sur la machine de soufflage, un organe de saisie (17) au moyen duquel une douille de prolongation (17) admise depuis un magasin est introduite à la presse dans l'ouverture de mise en place (10).
